(19) **Europäisches Patentamt**

**European Patent Office**

**Office européen des brevets**

(11) **EP 0 900 641 B1**

(12) **EUROPEAN PATENT SPECIFICATION**

(45) Date of publication and mention
of the grant of the patent:
**18.07.2001 Bulletin 2001/29**

(51) Int Cl.[7]: **B29C 47/10**, B29B 7/60,
B01F 15/02

(21) Application number: **98202855.7**

(22) Date of filing: **27.08.1998**

(54) **Process for the preparation of a polymer composition**

Verfahren zur Herstellung einer Polymerzusammensetzung

Procédé pour la préparation d'une composition polymère

(84) Designated Contracting States:
**BE DE ES FR GB IT NL**

(30) Priority: **02.09.1997 NL 1006913**

(43) Date of publication of application:
**10.03.1999 Bulletin 1999/10**

(73) Proprietor: **DSM N.V.**
**6411 TE Heerlen (NL)**

(72) Inventor: **Frusch, Johannes Maria**
**6121 HT Born (NL)**

(56) References cited:
**EP-A- 0 393 379     EP-A- 0 718 346**

• **DATABASE RAPRA RAPRA TECHNOLOGY
LTD., SHAWBURY, SHREWSBURY,
SHROPSHIRE, GB AN: 383361, DOMINEY S.:
"Incorporation of liquid additives to extruder
melts" XP002061735 & POLYMER PROCESSING
MACHINERY. PROCEEDINGS OF THE 2ND
INTERNATIONAL CONFERENCE, 8 - 9 July 1987,
page 9/1-9. 28 BRADFORD**
• **GRAFF G: "LIQUID COLORANTS ARE FREE OF
OLD DRAWBACKS, GAIN IN POPULARITY"
MODERN PLASTICS INTERNATIONAL, vol. 26,
no. 1, 1 January 1996, page 23, 25 XP000554696**

**Description**

The invention relates to a process for the preparation of a polymer composition comprising a matrix polymer and polytetrafluoroethylene particles dispersed herein. In particular, the invention relates to the preparation of a polymer composition containing a polycarbonate matrix polymer and polytetrafluoroethylene particles dispersed herein.

Polytetrafluoroethylene (PTFE) is used on a large scale for making polymers, in particular polycarbonate, flame-retardant. The PTFE particles present in a polymer composition make the polymer composition drip less during exposure to high (burning) temperatures. PTFE's anti-dripping effect originates in the typical morphology of the highly crystalline PTFE polymer. Above 19°C, PTFE undergoes a change in crystalline structure, the PTFE molecules easily forming fibrils. PTFE fibrils are formed during the processing of a polymer composition containing PTFE particles - for example by injection-moulding granulate. These PTFE fibrils are oriented in the flow direction by the - usually high - shear rates occurring during the processing, after which they are 'frozen' in this oriented state in the polymer composition cooled to room temperature. The 'frozen' PTFE fibrils ensure that, when exposed to a flame, the polymer composition will move away from this flame, which may explain PTFE's good anti-dripping effect.

PTFE's crystalline structure however also has a major drawback. During storage of a PTFE powder, the particles of the PTFE powder easily form fibrils and coagulate under the influence of pressure and/or slight shear. This may also be the case in the preparation of the granulate. Use of such coagulated PTFE powder in a polymer composition showed that the anti-dripping effect of the PTFE particles is reduced or even disappears altogether. This is of course undesirable.

Usually a powdered premix of PTFE particles and powder particles of the polymer is made to prevent the risk of the PTFE particles forming fibrils and coagulating already during storage or during the preparation of the granulate. The PTFE particles will coagulate less readily in this powdered premix because they are surrounded by powder particles of the polymer. A polymer composition is subsequently obtained by mixing the powdered premix with the other components of the polymer composition in a suitable mixing apparatus, for example by means of compounding to form a granulate with the aid of an extruder.

A process for the preparation of a polymer composition containing a polycarbonate matrix polymer, a poly (styrene-co-acrylonitrile) (SAN) copolymer and polytetrafluoroethylene particles dispersed herein in which use is made of a powdered premix is for example described in EP-A-345522. The premix is prepared by mixing a PTFE emulsion with a SAN emulsion in water and subsequently coagulating this emulsion mixture, for example by means of spray-drying, freeze-drying, or by adding inorganic or organic salts, acids, bases or organic solvents soluble in water. After removal of the water through centrifugation and drying, the powdered premix is ultimately obtained.

An alternative process for the preparation of a premix is described in EP-A-718346. The premix is herein obtained by mixing a PTFE emulsion in water with a solution of polycarbonate and a suitable organic solvent, for example methylene chloride. Next, the organic solvent is removed from this mixture by means of steam-precipitation, which ultimately results in a powdered premix of polycarbonate and PTFE.

It will be clear that according to the state of the art the powdered premix has to be used in polymer compositions to obtain the desired flame-retardant properties, and that great effort is made to prepare this premix.

It would nevertheless be very advantageous to provide a process for the preparation of a polymer composition containing a matrix polymer and PTFE particles dispersed herein that makes it unnecessary to use the premix and nevertheless yields the same flame-retardant and mechanical properties.

This aim is surprisingly achieved by the process according to the invention, which is characterised in mixing a PTFE particles containing suspension with the matrix polymer in melted state in a suitable mixing apparatus, the PTFE suspension being dosed to the mixing apparatus by means of a peristaltic pump.

Mixing apparatuses suitable for the process according to the invention are in principle all the mixing apparatuses for thermoplastic polymers known to a person skilled in the art. It is for example possible to use static and dynamic mixers. It is also possible to use so-called Buss cokneaders. Preferably a single- or double-screw extruder is used. It has been found that the use of such an extruder leads to a better dispersion of the PTFE particles in the matrix polymer. Moreover, the residence time needed is shorter than in other suitable mixing apparatuses.

When single- or double-screw extruders are used, the matrix polymer is fed, usually in the form of a granulate, to the extruder's throat (the hopper), which is at one end (upstream relative to the screw) of the extruder. At the throat, the pressure in the extruder will be about zero. At the other end of the extruder (downstream relative to the screw) there are usually degassing points for allowing low-molecular substances present in the matrix polymer to escape.

When an extruder is used as a mixing apparatus, the fluid PTFE mixture is preferably supplied via the throat, i.e. where the pressure is virtually zero.

The peristaltic pumps suitable for the process according to the invention are commonly known and are for example described in the American patent US 3,887,306. Such peristaltic pumps usually consist of a supporting band lying concentrically around a central axis, a pump tube lying against the supporting band which is fixed at at least one side, and compression organs that can rotate around the central axis, which are set radially inwards at a distance from the supporting band such that they can locally constrict the pump tube. Peristaltic pumps are usually used in the building industry to pump liquids with a very high viscosity, for example cement and mortar.

The peristaltic pumps that are suitable for the process according to the invention usually have a capacity of 0.005 to 50 l/hour. Such pumps are commercially available, for example from Watson-Marlow in Great Britain.

Preferably the fluid PTFE mixture is dosed to the mixing apparatus by means of a peristaltic pump, the parameter $\gamma$ being lower than 10 sec$^{-1}$. More preferably the parameter $\gamma$ is lower than 5 sec$^{-1}$. Most preferably this is lower than 2 sec$^{-1}$. The parameter $\gamma$ is here defined as $\gamma = Q/\pi.D^3$, where Q is the peristaltic pump's set flow rate in m$^3$/sec and D is the pump tube's diameter (in m). The parameter $\gamma$ is proportional to the shear rate experienced by the PTFE mixture during the pumping. The PTFE mixture is hence according to the invention subjected to the lowest possible shear rate during its dosage. As a result, the risk of fibrillation and coagulation of the PTFE particles in the mixture decreases. It has been found possible to keep the shear rate low enough to achieve this aim only by using a peristaltic pump.

'PTFE' is in the context of this invention understood to be all fluorinated polyolefins. They are preferably used in polymer compositions as flame retardants and anti-dripping agents and can for example be chosen from the group comprising poly(vinylidene fluoride), poly(vinyl fluoride), poly (trifluoroethylene), poly(chlorotrifluoroethylene) and poly (tetrafluoroethylene), poly(tetrafluoroethylene-cohexafluoropropylene) and the like. Preferably poly(tetrafluoroethylene) is used.

Suitable PTFE is obtainable as a powder, for example from DuPont as Teflon™ 636-N, or as a dispersion in water (latex), for example from the same company as Teflon™ 30N. The average PTFE particle size is usually between 0.01 and 1000 micron, preferably between 0.03 and 20 micron, most preferably between 0.05 and 0.5 micron.

The PTFE particles containing suspension can be prepared by mixing PTFE powder into a suitable liquid, for example by means of a static mixer. Preferably an aqueous dispersion (latex) of the particles is chosen for the fluid mixture of PTFE particles. Suitable PTFE latexes usually contain between 40 and 80 wt.% PTFE particles, preferably between 50 and 70 wt.%. A particularly suitable PTFE latex is Teflon™ 30N, obtainable from DuPont.

The amount of PTFE particles that is added to the polymer composition in the process according to the invention is preferably between 0.005 and 5 wt.%, more preferably between 0.03 and 0.50 wt.%, relative to the weight of the polyester matrix polymer.

The process according to the invention can in principle be used for all types of matrix polymer. The process is for example extremely suitable for matrix polymers that are usually made flame-retardant by adding, in addition to other suitable flame retardants, PTFE as an anti-dripping agent. It is for example possible to use the process according to the invention for the preparation of a polymer composition containing a matrix polymer chosen from the group comprising polyesters, polyarylene ethers, polyamides and polyolefins. Preferably the process according to the invention is used for the preparation of polymer compositions containing polyesters and/or polyarylene ethers.

The group of compounds referred to as 'polyarylene ethers' in the context of the present invention contains all the polymers that are prepared in a known way through oxidative coupling of phenol compounds, as for example described in US 3,306,879. It is also possible to use mixtures of a polyarylene ether and a styrene copolymer that improves the impact resistance, for example a mixture of a polyphenylene ether with rubber-containing polystyrene (PPO/HIPS).

The group of compounds referred to as 'polyester' in the context of the present invention comprises all the polyesters of diols and/or diphenols and an organic acid. Suitable polyesters in the composition according to the invention are for example polyesters composed of at least one aromatic and/or aliphatic dicarboxylic acid with 8-14 carbon atoms and at least one diol. Preferably the polyester in the polymer composition according to the invention is a polyalkylene terephthalate, in particular polyethylene terephthalate (PET) or polybutylene terephthalate (PBT).

Most preferably the polyester in the composition according to the invention is chosen from the group of polyesters of diols or diphenols and carbonic acid usually referred to as 'polycarbonates'. It is also possible to use mixtures of polycarbonates with for example PET or PBT. A particularly suitable polymer composition contains, in addition to PTFE and polycarbonate, also a styrene copolymer that improves the impact resistance. Examples of such styrene polymers are graft polymers of poly(styrene-co-acrylonitrile) on a diene rubber, for example butadiene rubber (ABS) and/or ethylene-propylene rubber (AES). An also particularly suitable styrene copolymer is a graft polymer of (meth) acrylate on a butadiene rubber, for example MBS. It is also possible to add additional (co)polymers to the resin composition, for example poly(styrene-co-acrylonitrile) and/or polymethyl methacrylate.

Suitable polycarbonates that can be used in the composition according to the invention are aromatic polycarbonates and block copolymers containing aromatic and aliphatic polycarbonate blocks. Linear and branched polycarbonates can also be used. Such polycarbonates and the preparation thereof are for example described in Kunststoff Handbuch, Hanser Verlag, Munich, Germany, 1992, pp. 118-148.

Polycarbonates can for example be prepared through conversion of a bivalent phenol with phosgene according to an interfacial polymerisation process, and from bisphenol and carbonate esters according to the melt-reesterification process.

The polycarbonates may be branched as a result of the absorption of small amounts, preferably between 0.05 and 2.0 mol.% relative to the diphenols used, of trifunctional or polyfunctional compounds.

The thermoplastic polycarbonates have a weight average molecular weight of between 5,000 and 150,000, preferably of between 10,000 and 100,000, determined by measuring the relative viscosity of a 0.5 wt.% solution of the polyester in dichloromethane at 25°C.

It is possible to add the additives usually used for the aforementioned matrix polymers to the composition according to the invention. Suitable additives are for example thermal stabilisers, such as organic phosphites and phenolic antioxidants, UV stabilisers, and also means for preventing hydrolysis, flame retardants, anti-dripping agents and inert fillers. It is also possible to add colourants and pigments to the composition.

The composition according to the invention can be prepared and processed in a manner known to a person skilled in the art. It is for example possible to use static kneaders to prepare the composition. It is also possible to use a continuous kneader, for example single-screw extruders and corotating double-screw kneaders, for example supplied by Werner & Pfleiderer™ in Germany. The composition can also be excellently prepared with the aid of a Buss™ cokneader.

The composition is also processed into objects in a manner known to a person skilled in the art, for example by means of injection-moulding or compression-moulding. It is also possible to use processing techniques like extrusion, blow moulding or vacuum forming.

The invention will now be further elucidated with reference to the following examples without incidentally being limited hereto.

Example I

A polymer composition with the following composition

(A) 99.06 parts by weight of a polycarbonate powder based on Bisphenol-A with a Limiting Viscosity Number (LVN) of 46 ml/g, measured in dichloromethane at 25°C;
(B) 0.42 parts by weight of a PTFE Teflon™ 30-N emulsion with a density of 1.4 kg/l, obtainable from DuPont;
(C) 0.52 parts by weight of powdered additives

was obtained by mixing components (A) and (C) at room temperature with the aid of a 'Diosna™ V25 Universal Mischer' high-speed mixing apparatus and subsequently mixing the powdered mixture obtained together with component (B) in a ZSK™-25 extruder at a temperature of 280°C and a speed of 200.

The PTFE emulsion (B) was fed to the extruder's hopper (throat) by means of a peristaltic pump of type 101U/2R from Watson-Marlow. The pump tube had a diameter of 2 mm. The set flow rate was 1.44 g/minute (drop by drop). The powder mixture of components (A) and (C) was fed to the hopper in a manner known to a person skilled in the art. This powder mixture was dosed to the hopper very easily and regularly because the powder mixture is virtually dry and flows easily.

Next, test bars were injection-moulded with the aid of a Boy™ 50 M from the polymer composition obtained in the form of granulate. The melt temperature was 300°C, the temperature of the mould had been set to 90°C.

The test bars were subjected to a burning test (UL94 test protocol according to Underwriters Laboratories). The UL94 classification obtained and the time to drip are indicated in Table 1. In the context of the present application the 'time to drip' is defined as the amount of time that passes until the test bar starts to drip after constant contact with the flame. The flame is here defined as prescribed in the UL94 standard (UL94V test).

Comparative Experiment A

A polymer composition with the same composition as in Example I was prepared by mixing the components in a ZSK™ 25 extruder at a temperature of 280°C and a speed of rotation of 200. The PTFE (B) was added to the polymer composition in the known manner, namely by first preparing a premix before the extrusion. The premix was prepared by mixing components (A), (B) and (C) at room temperature with the aid of a 'Diosna™ V25 Universal Mischer' high-speed mixing apparatus. Next, the somewhat sticky powder mixture obtained was fed to the hopper of a ZSK™-25 extruder and mixed at a temperature of 280°C and a speed of rotation of 200. It was difficult to dose the premix properly and regularly because the premix regularly adhered to the hopper because of its stickiness. Test bars were subsequently injection-moulded from the polymer composition obtained in the form of granulate using a Boy™ 50M. The melt temperature was 300°C, the temperature of the mould had been set to 90°C.

The test bars were subjected to a burning test (UL94 test protocol according to Underwriters Laboratories). The UL94 classification obtained and the time to drip are indicated in Table 1.

Comparative Experiment B

A polymer composition with the same composition as in Example I was obtained by mixing components (A) and (C) at room temperature with the aid of a 'Diosna™ V25 Universal Mischer' high-speed mixing apparatus and subsequently mixing the powder mixture obtained together with component (B) in a ZSK™-25 extruder at a temperature of 280°C and a speed of rotation of 200.

The PTFE emulsion (B) was fed to the extruder's hopper (throat) by means of a BARMAG gear pump, type SV77C (capacity of 0.3 cm$^3$/revolution) at a flow rate of 1.44 g/minute. The powder mixture of components (A) and (C) was fed to the hopper in a manner known to a person skilled in the art.

After a few minutes the gear pump became blocked. When the pump was opened it was found to contain hard lumps and strands of coagulated PTFE particles. It hence proved to be impossible to dose PTFE emulsion to the extruder with the aid of a gear pump.

Table 1

| Burning properties | | |
|---|---|---|
| UL94 test (1.5 mm) | Example I | Comp. Exp. A |
| Burning times on 1st contact with flame (sec.) | 1,1,1,1,1 | 1,1,1,1,1 |
| | 1,1,1,1,1 | 1,1,1,1,1 |
| Burning times on 2nd contact with flame (sec.) | 1,2,1,1,1 | 1,3,1,1,1 |
| | 1,1,2,1,1 | 1,1,1,2,1 |
| V-0 percentage (%) | 100 | 100 |
| Classification | V-0 | V-0 |
| Time to drip (sec.) | 55 | 37 |

The test results show that the process according to the invention leads to polymer compositions with the same, or even improved, flame-retardant properties in comparison with a polymer composition prepared using the process according to the state of the art. The process according to the invention moreover has the major advantage that the problems that occur in dosing the known premix to the mixing apparatus no longer occur.

**Claims**

1. Process for the preparation of a polymer composition containing a matrix polymer and polytetrafluoroethylene (PTFE) particles dispersed herein, characterised in that a suspension of PTFE particles is mixed with the matrix polymer in melted state in a suitable mixing apparatus, the PTFE suspension being dosed to the mixing apparatus by means of a peristaltic pump.

2. Process according to Claim 1, characterised in that the mixing apparatus has been chosen from the group comprising a single-screw extruder, a double-screw extruder and a Buss cokneader.

3. Process according to Claim 1 or Claim 2, characterised in that the matrix polymer is a polyester or a polyarylene oxide.

4. Process according to Claim 3, characterised in that the polyester matrix polymer is a polycarbonate.

5. Process according to any one of Claims 1-4, characterised in that the PTFE suspension is dosed to the mixing apparatus by means of a peristaltic pump, the parameter $\gamma$ being lower than 5 sec$^{-1}$, $\gamma$ being given by

$$\gamma = Q/\pi.D^3$$

in which Q is the peristaltic pump's set flow rate (in m$^3$/sec.) and D is the pump tube's diameter (in m).

**Patentansprüche**

1. Verfahren zur Herstellung einer Polymerzusammensetzung, welche ein Matrixpolymer und darin dispergierte Polytetrafluorethylen(PTFE)-Partikel enthält, dadurch gekennzeichnet, dass eine Suspension von PTFE-Partikeln mit dem Matrixpolymer in geschmolzenem Zustand in einer geeigneten Mischvorrichtung gemischt wird, wobei die PTFE-Suspension mittels einer peristaltischen Pumpe zu der Mischvorrichtung dosiert wird.

2. Verfahren gemäß Anspruch 1, dadurch gekennzeichnet, dass die Mischvorrichtung ausgewählt worden ist aus der Gruppe, umfassend einen Einschneckenextruder, einen Doppelschneckenextruder und einen Buss-Cokneter.

3. Verfahren gemäß Anspruch 1 oder Anspruch 2, dadurch gekennzeichnet, dass das Matrixpolymer ein Polyester oder ein Polyarylenoxid ist.

4. Verfahren gemäß Anspruch 3, dadurch gekennzeichnet, dass das Polyester-Matrixpolymer ein Polycarbonat ist.

5. Verfahren gemäß einem der Ansprüche 1-4, dadurch gekennzeichnet, dass die PTFE-Suspension mittels einer peristaltischen Pumpe zu der Mischvorrichtung dosiert wird, wobei der Parameter $\gamma$ niedriger als 5 Sek.$^{-1}$ ist, $\gamma$ durch

$$\gamma = Q/\pi.D^3$$

bestimmt wird, worin Q die eingestellte Fließgeschwindigkeit (in m$^3$/Sek.) der peristaltischen Pumpe darstellt und D den Röhrendurchmesser (in m) der Pumpe darstellt.

**Revendications**

1. Procédé de préparation d'une composition polymère contenant un poly-mère formant matrice et des particules de polytétrafluoroéthylène (PTFE) dispersées dans celui-ci, caractérisé en ce qu'on mélange une suspension de particules de PTFE avec le polymère formant matrice à l'état fondu dans un appareil de mélange convenable, la suspension de PTFE étant dosée dans l'appareil de mélange au moyen d'une pompe péristaltique.

2. Procédé selon la revendication 1, caractérisé en ce que l'on choisit l'appa-reil de mélange dans le groupe comprenant une extrudeuse à une vis, une extrudeuse à deux vis et un co-malaxeur de Buss.

3. Procédé selon la revendication 1 ou 2, caractérisé en ce que le polymère formant matrice est un polyester ou un poly(oxyde d'arylène).

4. Procédé selon la revendication 3, caractérisé en ce que le polymère formant matrice de polyester est un polycarbonate.

5. Procédé selon l'une quelconque des revendications 1 - 4, caractérisé en ce que la suspension de PTFE est dosée dans l'appareil de mélange au moyen d'une pompe péristaltique, le paramètre $\gamma$ étant inférieur à 5 s$^{-1}$, $\gamma$ étant donné par la formule :

$$\gamma = Q/\pi.D^3$$

dans laquelle Q représente le débit de fonctionnement de la pompe péris-taltique (en m$^3$/s) et D représente le diamètre du tube de la pompe (en m).